# EUROPÄISCHE PATENTSCHRIFT

(11) **EP 2 539 105 B1**
(45) Veröffentlichungstag und Bekanntmachung des Hinweises auf die Patenterteilung: **13.11.2013**
(21) Anmeldenummer: 11711440.5
(22) Anmeldetag: 09.02.2011
(51) Int. Cl.: B23P 15/06, F16J 9/26

(54) **VERFAHREN ZUR HERSTELLUNG VON KOLBENRINGEN**
METHOD FOR PRODUCING PISTON RINGS
PROCÉDÉ DE FABRICATION DE SEGMENTS DE PISTON

(30) Priorität: 23.02.2010 DE 102010008924
(43) Veröffentlichungstag der Anmeldung: 02.01.2013
(73) Patentinhaber: Federal-Mogul Burscheid GmbH, 51399 Burscheid (DE)
(72) Erfinder: BÄRENREUTER, Dirk, 51519 Odenthal (DE); KELLNER, Markus, 51375 Leverkusen (DE)
(74) Vertreter: Döpp, Ludger
(86) Internationale Anmeldenummer: PCT/DE2011/000119
(87) Internationale Veröffentlichungsnummer: WO 2011/103853

(56) Entgegenhaltungen:
- EP-A2- 1 762 756
- DE-A1- 2 135 338
- DE-A1- 3 144 335
- DE-C1- 19 809 659
- GB-A- 633 457
- GB-A- 1 132 351
- GB-A- 1 441 961
- GB-A- 1 561 788
- GB-A- 2 254 905
- GB-A- 2 262 945
- JP-A- 10 103 519
- JP-A- 55 134 166

## Beschreibung

Die Erfindung betrifft ein Verfahren zur Herstellung von Kolbenringen, insbesondere von Kompressionskolbenringen, gemäß gattungsbildendem Teil des ersten Patentanspruchs.

Vielfach werden Kolbenringe dergestalt erzeugt, dass sie im Bereich ihrer äußeren Umfangsfläche zylindrisch bearbeitet werden. Anschließend erfolgt, beispielsweise durch Außendrehen, die Erzeugung einer später benötigten Kontur, der so genannten Laufflächenkontur. Auf diese vorgegebene nicht zylindrische Laufflächenkontur wird dann eine verschleißfeste Schicht, beispielsweise eine Chromschicht aufgebracht, die auf der erzeugten Kontur ihren Niederschlag findet und selbiger folgt. Die endgültige Laufflächengeometrie wird beispielsweise durch Rundläppen erzeugt. Um diesen Arbeitsgang in angemessener Zeit und mit korrekter Balligkeit durchführen zu können, muss die Lauffläche bereits eine Kontur aufweisen, die der Fertigkontur sehr nahe kommt.

Der Arbeitsgang Außendrehen zur Erzeugung der jeweils gewünschten Kontur der äußeren Umfangsfläche ist sehr zeit- und kostenintensiv.

Die DE 31 44 335 C2 offenbart ein Verfahren zur Herstellung von mit einer verschleißfesten Schicht zu versehenden rotationssymmetrischen Werkstücken, insbesondere von Kolbenringen, indem die Werkstücke paketiert und zentrisch auf einen Dom gespannt werden, die äußere Umfangsfläche dann mit einer verschleißfesten Schicht überzogen und anschließend das Paket wieder in die einzelnen Werkstücke aufgetrennt wird. Vor der Beschichtung werden die paketierten Werkstücke in axialer Richtung abgetastet, wobei die axiale Lage jeder Berührungsebene zwischen den einzelnen Werkstücken festgestellt und gespeichert wird und diese Daten nach der Beschichtung der Werkstücke einem oder mehreren Bearbeitungswerkzeugen zur Auffindung der Berührungsebenen zur Verfügung gestellt werden.

Durch die DE 198 09 659 C1 ist ein Verfahren zur Herstellung von Kolbenringen, insbesondere für Verbrennungskraftmaschinen, durch Abstechen einzelner Ringe von unrunden Buchsen aus metallischen Werkstücken bekannt geworden. Die Buchsen werden durch thermisches Spritzen von Spritzmaterial auf die Außenfläche eines als Formkörper dienenden Doms hergestellt, wobei der Dom auf der Umfangsfläche eine Stoßmarkierung aufweist und auf die Mantelfläche der Buchsen eine als Gleitschicht fungierende Schicht aufgetragen wird und anschließend die Kolbenringe von der Buchse abgestochen werden.

Der JP 55134166 ist ein Herstellungsverfahren für Kolbenringe zu entnehmen. Eine Vielzahl von Kolbenringen wird auf einen Dom gespannt, wobei die einzelnen Kolbenringe im Bereich ihrer Übergänge von den Flanken in die Laufflächen konisch ausgebildet sind. In diesem paketierten Zustand werden die Kolbenringe dann durch eine Sprühbehandlung beschichtet, wobei sichergestellt ist, dass in Folge der konischen Übergangsbereiche kein Verkleben der einzelnen Kolbenringe nach der Sprühbeschichtung gegeben ist.

Die GB 1441961 offenbart unter anderem ein Verfahren zur Herstellung von Kolbenringen, indem mehrere mit einer Außennut versehene Kolbenringe paketiert werden. Die Nut wird mit einem speziellen Gemisch harter und weicher Elemente beschichtet, wobei die einzelnen Kolbenringe abschließend einer mechanischen Bearbeitung unterzogen werden. Alternativ besteht auch die Möglichkeit, die Beschichtung auf mindestens eine der Flankenbereiche aufzubringen.

Durch die GB 1561788 ist ein Kolbenring bekannt geworden, der als Gusseisenkolbenring ausgebildet ist, auf dessen äußerer Umfangsfläche eine Chrom-Basis-Legierung mit 10 bis 40 % Eisen aufgebracht ist.

Der Erfindung liegt die Aufgabe zugrunde, ein vereinfachtes Verfahren zur Herstellung von Kolbenringen, insbesondere von Kompressionskolbenringen, bereit zu stellen, das gegenüber dem bisher zum Einsatz gelangenden Herstellungsverfahren optimiert ist und weniger Kosten verursacht.

Diese Aufgabe wird dadurch gelöst, dass mehrere Kolbenringe, insbesondere Kompressionskolbenringe zu einem Paket zusammengefasst im Bereich ihrer Umfangsfläche zylindrisch bearbeitet werden, dass auf die fertig bearbeitete zylindrische Umfangsfläche eine verschleißfeste galvanische Chromschicht aufgebracht wird, so dass die verschleißfeste Schicht innerhalb des gesamten Paketes eine konstante Schichtdicke aufweist und anschließend die Schicht dergestalt bearbeitet wird, dass eine Lauffläche entsteht, die einen Bereich maximaler und mindestens einen Bereich minimaler Schichtdicke aufweist.

Vorteilhafte Weiterbildungen des erfindungsgemäßen Verfahrens sind den zugehörigen Unteransprüchen zu entnehmen.

Durch das erfindungsgemäße Verfahren kann auf den Arbeitsgang Außenkonturdrehen verzichtet werden, wobei sich gegenüber dem bisherigen Verfahren Zeit und somit auch Kosten einsparen lassen. Von Vorteil ist, wenn die Kolbenringe, insbesondere die Kompressionsringe, beispielsweise auf einem Dorn zu einem Paket zusammengefasst werden, so dass dieses Paket im Bereich seiner die spätere Lauffläche bildenden äußeren Umfangsfläche zylindrisch bearbeitet werden kann.

Wie beim allgemeinen Stand der Technik auch, kann die äußere Umfangsfläche des Paketes durch Formdrehen zylindrisch bearbeitet werden.

Soweit notwendig, kann die so vorbearbeitete äußere Umfangsfläche bedarfsweise einer zusätzlichen zylindrischen Schleifbearbeitung unterzogen werden. Auch wenn diese zusätzliche Schleifbearbeitung nicht zwingend erforderlich ist, würde es gegenüber dem eingesparten Konturdrehvorgang ebenfalls eine Einsparung ergeben, bedingt dadurch, dass insbesondere bei geringen Chromschichtdicken sowohl die galvanisch aufzuchromende Schicht als auch das anschließende abzuarbeitende Volumen geringer ausfallen würde.

Grundsätzlich lässt sich aufgrund der geringeren Fläche ein glatter Zylinder mit geringerem Strom galvanisch verchromen, als ein aus vorprofilierten Ringen bestehender Dom. Somit ist neben dem geringeren Stromverbrauch auch eine bessere Schichtdickenverteilung auf der zylindrisch bearbeiteten äußeren Umfangsfläche zu erwarten.

Die verschleißfeste Schicht vorgebbarer Schichtstärke wird anschließend, beispielsweise durch Profilschleifen, bearbeitet, um so die endgültige Laufflächenkontur einzustellen.

Die verschleißfeste Schicht wird, einem weiteren Gedanken der Erfindung gemäß, einer Balligbearbeitung unterzogen, wobei der an einer Gegenlauffläche später anliegende tragende Bereich der Schicht eine maximale Schichtdicke aufweist, die sich in Richtung mindestens einer der Laufflächenkanten des Kolbenrings dergestalt reduziert, dass hier eine minimale Schichtdicke gegeben ist.

Je nach Einsatzfall kann dieser tragende Bereich entweder mittig, d.h. etwa auf halber axialer Höhe, des Kolbenrings vorgesehen werden, oder aber in einem der Randbereiche.

Durch geeignete Profilschleifwerkzeuge kann die jeweils geforderte Laufflächenkontur erzeugt werden, ohne dass die Gefahr besteht, in den Kantenbereichen des Kolbenrings in das Kolbenringmaterial einzudringen.

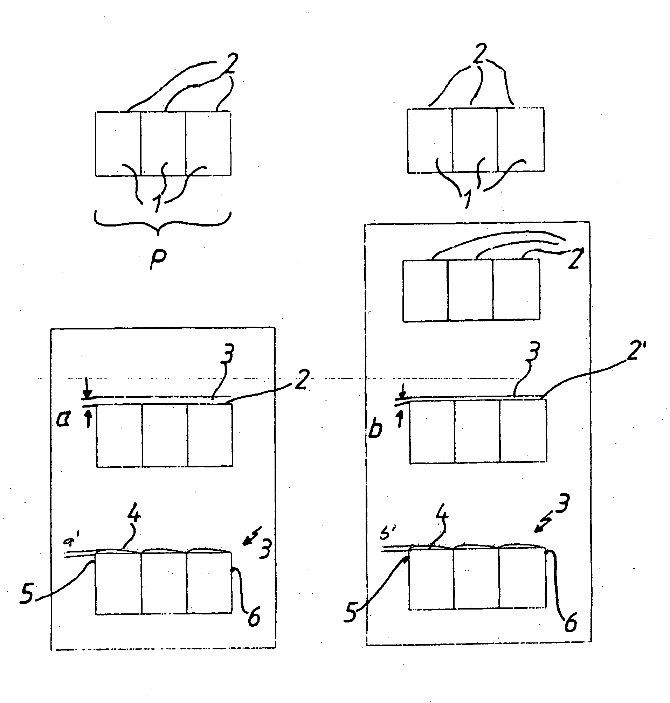

Der Erfindungsgegenstand ist anhand eines Ausführungsbeispiels in der Zeichnung dargestellt und wird wie folgt beschrieben.

Die einzige Figur zeigt zwei Beispiele zur Herstellung von Kolbenringen, insbesondere von Kompressionskolbenringen. In beiden Beispielen werden Grundkörper 1, beispielsweise aus Grauguss, zu einem nur angedeuteten Paket P zusammengefasst und einer Formdrehbearbeitung unterzogen, dergestalt, dass eine äußere zylindrische Umfangsfläche 2 gebildet wird.

Im linken Beispiel wird auf die zylindrische Umfangsfläche 2 direkt eine galvanisch aufgebrachte verschleißfeste Chromschicht 3 vorgebbarer Schichtdicke a aufgebracht. Ausschließlich diese Schicht 3 wird mittels eines Profilschleifwerkzeuges (nicht dargestellt) nun dergestalt bearbeitet, dass eine ballige Kontur 4 erzeugt wird, die in diesem Beispiel in einem der Laufflächenkantenbereiche 5 eine maximale Schichtdicke a' aufweist, während die Schichtstärke zum anderen Laufflächenkantenbereich 6 hin in minimierter Form vorgesehen ist.

Im rechten Beispiel wird im Anschluss an das zylindrische Formdrehen ein weiterer Bearbeitungsvorgang, nämlich zylindrisches Schleifen, vorgenommen, wodurch die formgedrehte zylindrische Umfangsfläche 2 nun durch weiterhin minimierten Materialabtrag eine materialreduzierte weitere zylindrische äußere Umfangsfläche 2' darstellt. In Analogie zum linken Beispiel wird nun die gegebene äußere Umfangsfläche 2' mit einer galvanisch erzeugten verschleißfesten Chromschicht 3 versehen, die gegenüber dem linken Beispiel eine reduzierte Schichtdicke b aufweist. In Analogie zum linken Beispiel wird ausschließlich diese Schicht 3 mittels eines geeigneten Profilschleifwerkzeuges (nicht dargestellt) so bearbeitet, dass eine ballige Kontur 4 entsteht. Ähnlich wie bei dem linken Beispiel ist die Schichtstärke b' im linken Laufflächenkantenbereich 5 größer ausgebildet als im rechten Laufflächenkantenbereich 6.

Um sicher zu stellen, dass auch im Kantenbereich 6 eine minimale Verschleißschicht gegeben ist, ist bei der Auslegung der galvanisch aufzubringenden Schichtstärke a,b ein gewisses Aufmaß vorzunehmen, um bei der anschließenden Profilbearbeitung dieser Schicht 3 im Kantenbereich 6 nicht auf das Grundmaterial des Grundkörpers 1 durchzuschleifen. Die Mindestdicke a',b' der Chromschicht 3 ist an der tragenden Stelle, also auf dem Scheitelpunkt der Balligkeit, zu messen. Die theoretische Mindestdicke a',b' an dieser Stelle ergibt sich aus dem Wert der Balligkeit und dem angesprochenen Wert der Sicherheit im Kantenbereich 6.

## Patentansprüche

1. Verfahren zur Herstellung von Kolbenringen, insbesondere von Kompressionskolbenringen, indem mindestens ein Grundkörper (1) dergestalt bearbeitet wird, dass eine als Lauffläche dienende Umfangsfläche (2,2') mit einer verschleißfesten Schicht (3) vorgebbarer Schichtdicke (a,b) versehen wird, **dadurch gekennzeichnet, dass** mehrere Kolbenringe (1), insbesondere Kompressionskolbenringe zu einem Paket (P) zusammengefasst im Bereich ihrer Umfangsfläche (2,2') zylindrisch bearbeitet werden, dass auf die fertig bearbeitete zylindrische Umfangsfläche (2,2') eine verschleißfeste galvanische Chromschicht (3) aufgebracht wird, so dass die verschleißfeste Schicht (3) innerhalb des gesamten Paketes (P) eine konstante Schichtdicke aufweist und anschließend die Schicht (3) dergestalt bearbeitet wird, dass eine Lauffläche (4) entsteht, die einen Bereich maximaler und mindestens einen Bereich minimaler Schichtdicke aufweist.

2. Verfahren nach Anspruch 1, **dadurch gekennzeichnet, dass** die äußere Umfangsfläche (2) des Pakets (P) durch Formdrehen erzeugt wird.

3. Verfahren nach Anspruch 1 oder 2, **dadurch gekennzeichnet, dass** die vorbearbeitete äußere Umfangsfläche (2) bedarfsweise zur Erzeugung einer materialreduzierten weiteren zylindrischen Umfangsfläche (2') einer Schleifbearbeitung unterzogen wird.

4. Verfahren nach einem der Ansprüche 1 bis 3, **dadurch gekennzeichnet, dass** ausschließlich die verschleißfeste Schicht (3) durch mechanisches Bearbeiten, insbesondere durch Profilschleifen, bearbeitet wird.

5. Verfahren nach einem der Ansprüche 1 bis 4, **dadurch gekennzeichnet, dass** die verschleißfeste Schicht (3) einer Balligbearbeitung unterzogen wird, wobei der an einer Gegenlauffläche anliegende tragende Bereich der Lauffläche (4) eine maximale Schichtdicke aufweist, die sich in Richtung mindestens eines Kantenbereichs (6) dergestalt reduziert, dass hier eine minimale Schichtdicke gegeben ist.

## Claims

1. A method for the production of piston rings, in particular compression piston rings, in that at least one base body (1) is treated such that a circumferential surface (2, 2') which is serving as bearing surface is provided with a wear-resistant layer (3) having a pre-determinable layer thickness (a, b), **characterized in that** several piston rings (1), in particular compression piston rings, are combined into a packet (P) and cylindrically processed in the region of their circumferential surfaces (2, 2'), that a wear-resistant galvanic chromium layer (3) is applied onto the fully machined cylindrical circumferential surface (2, 2') such that the wear-resistant layer (3) comprises a constant layer thickness within the entire packet (P) and afterwards the layer (3) is treated such that a bearing surface (4) is formed which comprises a region having a maximum layer thickness and at least one region having a minimum layer thickness.

2. A method according to claim 1, **characterized in that** the outer circumferential surface (2) of the packet (P) is generated by form lathing.

3. A method according to claim 1 or 2, **characterized in that** the pre-processed outer circumferential surface (2) is optionally submitted to a grinding treatment for generating a material reduced other cylindrical circumferential surface (2').

4. A method according to one of the claims 1 through 3, **characterized in that** exclusively the wear-resistant layer (3) is processed by mechanic machining, in particular by profile grinding.

5. A method according to one of the claims 1 through 4, **characterized in that** the wear-resistant layer (3) is submitted to a crowning treatment, wherein the carrying portion of the bearing surface (4), which carrying portion is adjacent to a counter-bearing surface, comprises a maximum layer thickness which diminishes in the direction of at least one edge portion (6) such that a minimum layer thickness is given here.

## Revendications

1. Procédé de fabrication de segments de piston, notamment de segments de piston de compression, par usinage d'au moins un corps de base (1) de sorte qu'une surface circonférentielle (2, 2') servant de surface de roulement est munie d'une couche résistante à l'usure (3) et ayant une épaisseur de couche prédéterminable (a, b), **caractérisé en ce qu'**on groupe plusieurs segments de piston (1), notamment des segments de piston de compression, dans un paquet (P) et les usine de manière cylindrique au niveau de leurs surfaces circonférentielles (2, 2'), qu'on applique une couche de chrome galvanique et résistante à l'usure (3) sur la surface circonférentielle cylindrique (2, 2') dont l'usinage est accompli, de sorte que la couche résistante à l'usure (3) comprend une épaisseur de couche constante à l'intérieur du paquet entier (P) et après on traite la couche (3) de sorte qu'une surface de roulement (4) se forme qui comprend une région ayant une épaisseur de couche maximale et au moins une région ayant une épaisseur de couche minimale.

2. Procédé selon la revendication 1, **caractérisé en ce que** la surface circonférentielle extérieure (2) du paquet (P) est générée par le tournage de forme.

3. Procédé selon la revendication 1 ou la revendication 2, **caractérisé en ce qu'**on soumet la surface circonférentielle extérieure (2) pré-usinée, en cas de besoin, à un traitement de meulage pour générer une autre surface circonférentielle cylindrique (2') comprenant moins de matériau.

4. Procédé selon l'une des revendications 1 à 3, **caractérisé en ce qu'**on traite exclusivement la couche résistante à l'usure (3) par usinage mécanique, notamment par rectification des profils.

5. Procédé selon l'une des revendications 1 à 4, **caractérisé en ce qu'**on soumet la couche résistante à l'usure (3) à un bombage, la région portante de la surface de roulement (4), laquelle région est adjacente à une contre-surface de roulement, comprenant une épaisseur de couche maximale qui diminue dans la direction d'au moins une région de bord (6) de sorte qu'on y trouve une épaisseur de couche minimale.
